# EUROPEAN PATENT SPECIFICATION

(11) **EP 4 413 271 B1**
(45) Date of publication and mention of the grant of the patent: **20.08.2025**
(21) Application number: 22789341.9
(22) Date of filing: 07.10.2022
(51) Int. Cl.: F16B 3/06, F03D 13/20, F16B 7/04, F16B 7/18, F16B 7/02, F16B 13/06

(54) **ASSEMBLY COMPRISING A FIRST AND A SECOND MEMBER AND A CONNECTOR, AND A METHOD OF ASSEMBLING SUCH AN ASSEMBLY**
ANORDNUNG MIT EINEM ERSTEN UND EINEM ZWEITEN ELEMENT UND EINEM VERBINDER SOWIE VERFAHREN ZUR MONTAGE SOLCH EINER ANORDNUNG
ENSEMBLE COMPRENANT UN PREMIER ET UN SECOND ORGANE ET UN ÉLÉMENT DE LIAISON, ET PROCÉDÉ D'ASSEMBLAGE D'UN TEL ENSEMBLE

(30) Priority: 07.10.2021 NL 2029335
(43) Date of publication of application: 14.08.2024
(73) Proprietor: C1 Connections Holding B.V., 2517 EJ Den Haag (NL)
(72) Inventor: WINKES, Jasper, 2517 EJ The Hague (NL)
(74) Representative: Arnold & Siedsma
(86) International application number: PCT/NL2022/050575
(87) International publication number: WO 2023/059200

(56) References cited:
- WO-A1-2018/139929
- WO-A1-2020/035770

## Description

The present invention relates to an assembly, comprising a first and a second member, and a connector to connect the first and second member relative to each other.

The invention further relates to a method of assembling such an assembly of a first and a second member that each comprise at least one passage.

The present invention is particularly suitable for offshore applications, e.g. for connecting a wind turbine to a monopile, a wind turbine to a transition piece, a transition piece to a monopile, as well as between members, i.e. tower segments, of a monopile or wind turbine, and jacket connections. It may also be used for a connection between the tower of a monopile and a nacelle, and possibly also for connecting rotor blades to the nacelle.

According to prior art applications in offshore, the members of such assemblies are traditionally provided with flanges which are connected using bolts of significant size. Currently M72 bolts are used for connecting a wind turbine tower to a monopile or transition piece. In a first step, these bolts are electrically tightened with 8.000 Nm. In a second step, the preload is increased with hydraulic tools to 22.000 Nm. The bolts itself are heavy and the tools for tightening the bolts is also heavy and hard to handle.

It appears that the actual preload on the bolts after some settling time is hard to predict and control, and may vary significantly. Although it is not exactly clear which factors influence the torque-tension relationship of the bolts, it may be concluded that installing the bolts using a "constant torque" method does not achieve satisfying results. Similar issues occur with tensioning systems for bolting. The preload on the bolts must be regularly checked and adjusted, periodically requiring significant maintenance work.

Furthermore, the bolts are arranged all around the circumference of the flanges, leaving only a very limited gap between adjacent bolts. A connection using flanges with bolts is insufficiently scalable to meet the ever increasing demands resulting from even larger wind turbines and greater depths as sea where they are installed.

International patent application WO 2018/139929 A1 of the same inventor proposes an assembly that is improved relative to a connection using flanges connected by bolts. This improved prior art assembly comprises:
- a first and a second section, each comprising a longitudinal axis;
- a fixation configured to fix the first and the second section;
- wherein at least one of the first and the second section comprises a body that is configured to be engaged by the fixation; and
- wherein the fixation comprises an abutment and a radially displaceable actuator.

The actuator is radially displaceable with respect to the longitudinal axis of the section that comprises the actuator. This allows the actuator itself to be employed as part of a clamp. During radial displacement of the actuator, an inclined surface of the actuator engages a specially machined surface of the first section and gradually increases the clamping force that connects the first and the second section. Although the assembly of WO 2018/139929 A1 already provided a significant improvement relative to the above-described traditional prior art connections using flanges connected by bolts, the inventor proposed further improvements, especially in order to overcome the disadvantage of the assembly of WO 2018/139929 A1 that a radial displacement of the actuator required a significant force due to the clamping action. Moreover, sections with a specially designed contact surface were required.

International patent application WO 2020/035770 A1 of the same inventor, which is considered the closest prior art for the present invention, proposed an improved assembly. At least the features of the characterizing portion of claim 1 are novel relative to WO 2020/035770 A1.

Relative to the assembly of WO 2018/139929 A1, a user may insert the connector of WO 2020/035770 A1 into the channel to an end position in a first step, followed by a further step of consecutively expanding said connector radially relative to said channel, to thereby connect the first and second member relative to each other. In this way, the connector may be accurately and easily placed in the channel by a user with very limited hassle or force. Only when the connector is placed in its desired end position, it is expanded in the channel to connect the first and second member relative to each other. Use of a connector as described in WO 2018/139929 A1 also makes specially machined contact surfaces with an inclination corresponding to an inclination of the radially displaceable actuator redundant.

Relative to the older prior art of bolted flanges, large scale (e.g. M72 as used nowadays in the year 2021, and future windparks even considering bolts up to M90) bolts are redundant. Also, the body may be less bulky than a flange comprising passages to accommodate a bolt. As a result, the assembly according to the invention, requires less material, is therefore more compact and lighter, and also more elegant. Whereas thick parts need to be forged, smaller parts may also be rolled, possibly allowing the members to be formed with alternative and more attractive manufacturing methods. Also, the assembly as described in WO 2018/139929 A1 is scalable, providing the opportunity to arrange multiple connectors in an axial direction of the members.

A further advantage of the assembly of WO 2020/035770 A1 relative to traditional bolted flanges, is the absence of these flanges, that would provide a significant mass outside the path where forces travel during driving the assembly into a ground using a hammer. The mass of conventional flanges may result in bending of the neck of the flanges. These bending stresses currently result in significantly reduced life time of the welds of these flanges when installed with a conventional impact hammer.

An even further advantage of the assembly of WO 2020/035770 A1 relative to bolted flanges, is that it may be applied for connecting members under the waterline. On the one hand, longitudinal members of a limited length may be used, allowing smaller ships to transport them to a desired location for an offshore construction.

The successively tightening the bolts of a bolted flange - which are typically tightened in multiple steps, as mentioned above - is very time consuming and labor-intensive. The assembly proposed in WO 2020/035770 A1 is less labor-intensive and time consuming than a connection having bolted flanges.

Compared to the older prior art of bolted flanges as described above, the connection provided by WO 2020/035770 A1 will show a superior fatigue resistance which is less sensitive to preload loss than typical bolted L-flanges, even under reduced preload levels relative to the initial torque upon installment. In bolted L-flanges the pre-tension is vital to prevent significant load fluctuations from occurring in the bolts or studs which have a poor fatigue resistance due to the presence of the threads. The connection provided by the proposed assembly proposed in WO 2020/035770 A1 does not experience these issues since the bolt only keeps the wedges in place but is, due to its orientation, not subjected to large load fluctuations. The main / dominant load fluctuations are experienced in the first member.

As discussed above, the previous international patent applications WO 2018/139929 A1 and WO 2020/035770 A1 of the same inventor already proposed a large number of significant improvements relative to the older prior art of bolted flanges. Nevertheless, there is an ongoing need to further improve such assemblies. In particular, there is an ongoing desire to optimize such an assembly, while preferably maintaining as much as possible of the above mentioned advantages of the closest prior art WO 2020/035770 A1.

An objective of the present invention is to provide an assembly, that is improved relative to the prior art and wherein at least one of the above stated problems is obviated or alleviated.

Said objective is achieved with the assembly according to claim 1 of the present invention, comprising:
- a first member and a second member, wherein;
   - the second member has a fork-shaped cross section with a main body arranged between two substantially parallel walls that each comprise at least one passage;
   - the first member is arranged between the two walls of the second member in abutting contact with a face of the main body of the second member, the first member comprising a passage;
   - said passage of the first member and the passages of the second member define a channel;
- a connector that is axially insertable into said channel to an end position and consecutively expandable radially relative to said channel, to connect the first and second member relative to each other by pushing, in an expanded state of the connector, the first member in a radial direction relative to said channel against the face of the main body of the second member to define a clamping contact and thereby a pre-tensioned connection in said radial direction relative to said channel between the face of the main body of the second member and faces defined by the passages in the substantially parallel walls of the second member;
- wherein said connector exhibits a length extending in a longitudinal direction of the channel and comprises:
   - a first expansion block that is configured to push the first member against the face of the main body of the second member;
   - a second expansion block that is configured to contact the faces defined by the passages in the substantially parallel walls of the second member; and
   - one or more than one wedge that is arranged in between the first expansion block and the second expansion block, and that is configured to be displaced longitudinally relative to the channel to thereby radially expand the connector relative to the channel; and
- wherein, at a cross section halfway the length of the connector, the cross sectional area and the height of the first expansion block in the radial direction relative to said channel is smaller than the cross sectional area and the height of the second expansion block in said radial direction relative to said channel.

Due to the cross sectional area and the height of the first expansion block being smaller than the cross sectional area and the height of the second expansion block, the total radial height of the connector may be optimized, especially in view of providing an optimized strength to dimension ratio. Thus, compared to the connector of the assembly according to the closest prior art WO 2020/035770 A1, the dimensions of the connector may be smaller at the same strength of the connector. A smaller connector saves materials, both in the connector itself, but also in the first and second member of the assembly. A smaller connector is also lighter in weight, which is an advantage for personnel installing said connectors. And besides providing an assembly with an optimized connector, as much as possible of the above mentioned advantages of the closest prior art WO 2020/035770 A1 are also maintained.

The invention further relates to a method of assembling a first and a second member that each comprise at least one passage, wherein the second member has a fork-shaped cross section with a main body arranged between two substantially parallel walls that each comprise at least one passage, said method comprising the steps of:
- arranging the first member between the two walls of the second member;
- positioning the passages of the first and the second member to define a channel;
- providing a connector that comprises:
   - a first expansion block that is configured to push the first member against the face of the main body of the second member;
   - a second expansion block that is configured to contact faces defined by the passages in the substantially parallel walls of the second member; and
   - one or more than one wedge that is arranged in between the first expansion block and the second expansion block, and that is configured to be displaced longitudinally relative to the channel by an actuator to thereby radially expand the connector;
- inserting the connector into the channel to an end position;
- consecutively expanding said connector radially relative to said channel, to thereby connect the first and second member relative to each other;
- the expanded connector pushing the first member in a radial direction relative to said channel against a face of the main body of the second member to define a clamping contact and thereby a pre-tensioned connection in a radial direction relative to said channel between the face of the main body of the second member and faces defined by the passages in the substantially parallel walls of the second member; and
- wherein the step of providing the connector comprises providing a connector of which, at a cross section halfway the length of the connector, the cross sectional area and the height of the first expansion block in the radial direction relative to said channel is smaller than the cross sectional area and the height of the second expansion block in said radial direction relative to said channel.

Preferred embodiments are the subject of the dependent claims.

In the following description preferred embodiments of the present invention are further elucidated with reference to the drawing, in which:
Figure 1 is a schematic view of an offshore wind turbine tower supported by a monopile;

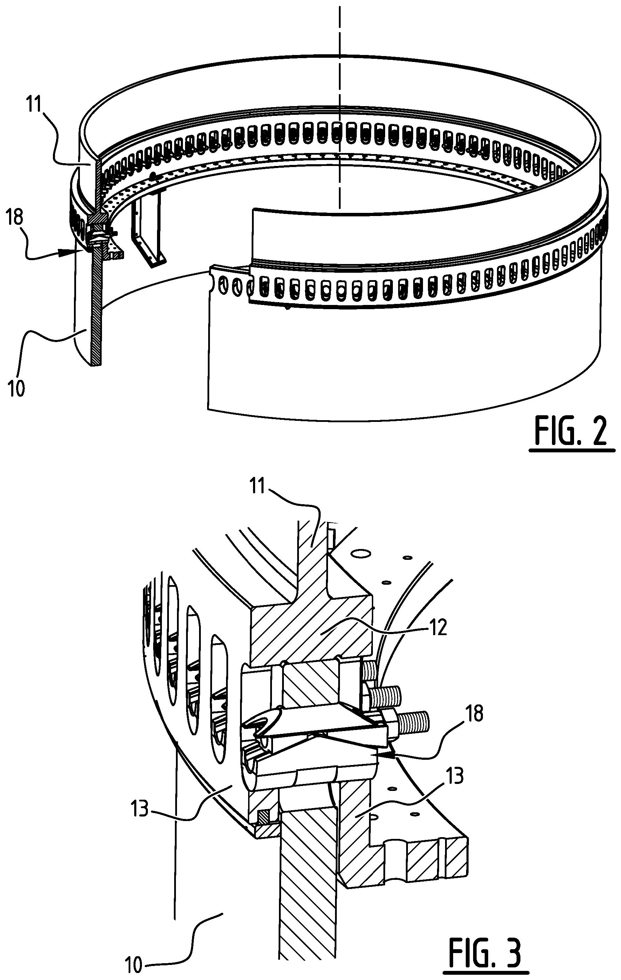

Figure 2 is a perspective view of an assembly according to the present invention;
Figure 3 is a cross sectional perspective view of the assembly shown in Figure 2;
Figure 4 is a perspective view of the connector;
Figure 5 is a cross sectional view of the connector of Figure 4;
Figure 6 is a detailed side view of the connector of Figure 4;
Figure 7 is an exploded perspective view of the connector of Figure 4;
Figures 8-10 are cross sectional views of successive steps of assembling an assembly according to the invention;
Figure 11 is a detailed cross sectional view of Figure 10;
Figure 12 is a detailed cross sectional view of Figure 11;
Figure 13 is a cross sectional view of a final step of assembling the assembly according to the invention;
Figure 14 is a detailed cross sectional view of Figure 13; and
Figure 15 shows the forces acting in the radially expanded state of the connector of Figure 13.

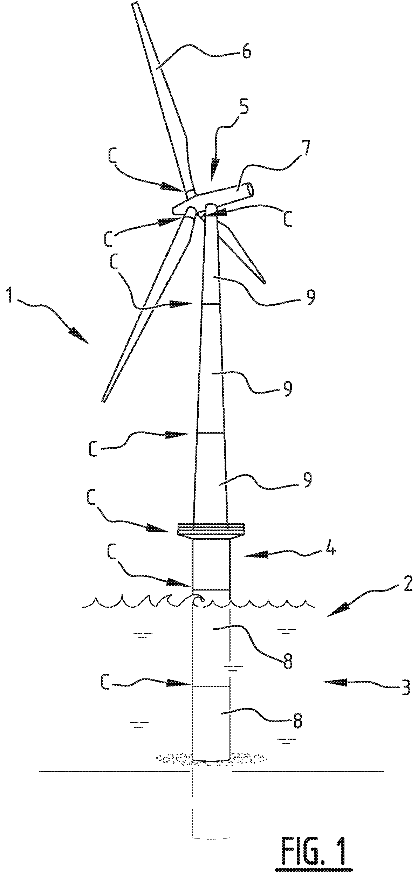

An example of an offshore construction comprising multiple connections C where an assembly according to the invention may be applied is shown in Figure 1. An offshore wind turbine tower 1 is supported by a supporting base structure 2 which is in Figure 1 embodied as a monopile 3 with a transition piece 4. The skilled person will understand that similar connections are present for alternative supporting base structures 2, such as (not shown) jackets.

The connections C may be applied between separate members 8 of the monopile 3, between the monopile 3 and the transition piece 4, between the transition piece 4 and the turbine tower 1, between members 9 of the turbine tower 1, and between a rotor blade 6 and a hub of a rotor.

During use, a wind turbine 5 will be oriented such that the rotor blades 6 are optimally driven by the available wind power. The rotor blades 6 drive a (not shown) generator in the nacelle 7, wherein the generator generates electricity. The wind turbine 5 causes alternating loads on any connection C in the construction, and dependent on the wind direction, specific parts of the connection C have to absorb most of the loads.

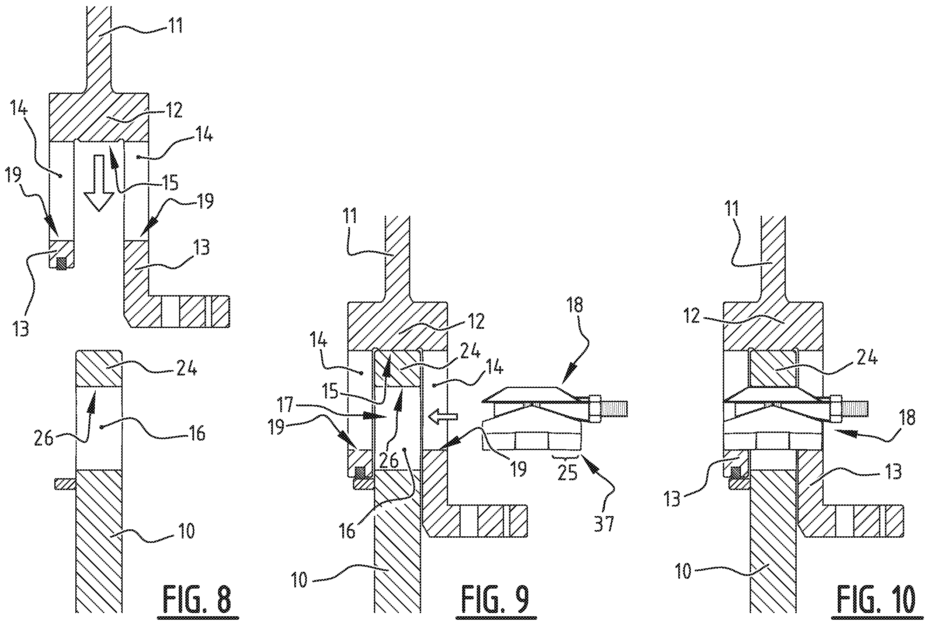

The assembly according to the present invention comprises a first member 10 and a second member 11. The second member 11 has a fork-shaped cross section with a main body 12 arranged between two substantially parallel walls 13 that each comprise at least one passage 14 (Figure 8). The first member 10 is arranged between the two walls 13 of the second member 11 in abutting contact with a face 15 of the main body 12 of the second member 11. The first member 10 also comprises a passage 16. The passage 16 of the first member 10 and the passages 14 of the second member 11 define a channel 17 (Figure 9). The term "substantially" in relation to the substantially parallel walls 13 of the second member 11 is to be interpreted as said walls 13 enclosing an angle of less than 10°.

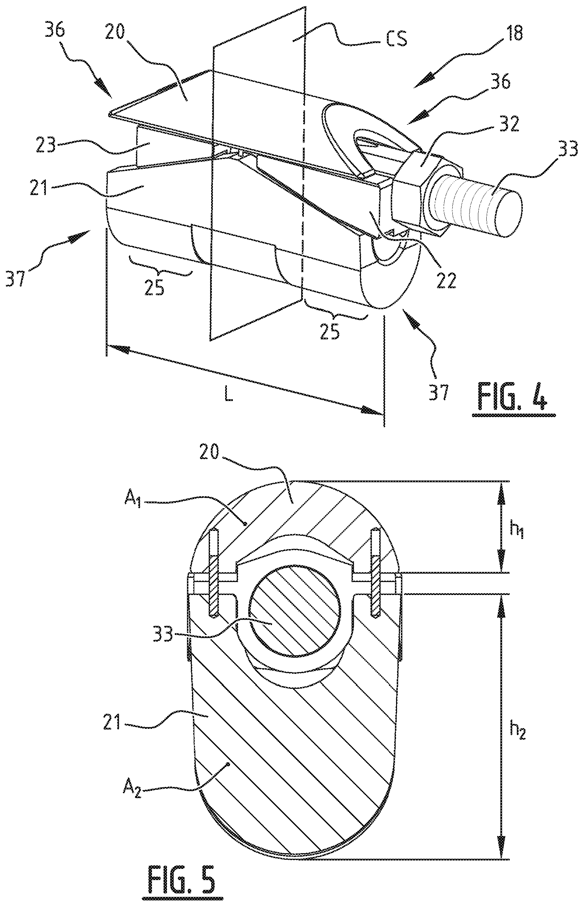

A connector 18 (Figures 4-7) is axially insertable into said channel 17 to an end position and consecutively expandable radially relative to said channel 17, to connect the first member 10 and the second member **11** relative to each other by pushing, in an expanded state of the connector 18, the first member 10 in a radial direction relative to said channel 17 against the face 15 of the main body 12 of the second member 11. Due to this pushing action, a clamping contact is defined, which results in a pre-tensioned connection in said radial direction relative to said channel 17 between the face 15 of the main body 12 of the second member 11 and faces 19 (Figure 8) that are defined by the passages 14 in the substantially parallel walls 13 of the second member 11.

The connector 18 exhibits a length L extending in a longitudinal direction of the channel 17 and comprises a first expansion block 20 that is configured to push the first member 10 against the face 15 of the main body 12 of the second member 11, and a second expansion block 21 that is configured to contact the faces defined 19 by the passages 14 in the substantially parallel walls 13 of the second member 11. The connector 18 furthermore comprises one or more than one wedge 22, 23 that is arranged in between the first expansion block 20 and the second expansion block 21, and that is configured to be displaced longitudinally relative to the channel 17 to thereby radially expand the connector 18 relative to the channel 17.

At a cross section CS halfway the length L of the connector 18, the cross sectional area A₁ and the height h₁ of the first expansion block 20 in the radial direction relative to said channel 17 is smaller than the cross sectional area A₂ and the height h₂ of the second expansion block 21 in said radial direction relative to said channel 17.

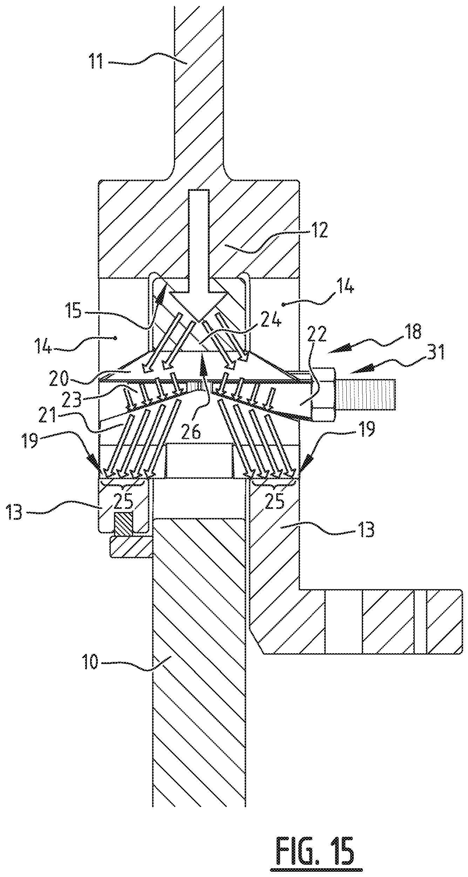

After many years of testing and Finite Element simulations of the connector described in the closest prior art document WO 2020/035770 A1, the inventor has come to the insight that the first expansion block 20 and the second expansion block 21 are exposed to bending moments of a very different magnitude, even though they jointly provide the clamping contact for the pre-tensioned connection between the first member 10 and the second member 11**.** This difference in bending moment may, in hindsight, be explained by the path the forces follow through the first expansion block 20, and the second expansion block 21, respectively (Figure 15). Forces passing through the first expansion block 20 follow a substantially straight path from the main body 12 of the second connector 11**,** via an end portion 24 of the first member 10 to the wedge(s) 22, 23. Consequently, the first expansion block 20 is only exposed to a bending moment of limited magnitude. To the contrary, the bending moment experienced by the second expansion block 21 is directed slightly inward, i.e. towards the middle of the connector 18 where the cross section CS halfway the length L of the connector 18 is located, while the second expansion block 21 is supported only at its outer ends 25 on the faces 19 defined by the passages 14 in the substantially parallel walls 13 of the second member 11. As a result, the second expansion block 21 has to be able to withstand a bending moment that is significantly larger than the bending moment experienced by the first expansion block 20.

If, at the cross section CS halfway the length L of the connector 18, the cross sectional area A₁ and the height h₁ of the first expansion block 20 in the radial direction relative to said channel 17 is smaller than the cross sectional area A₂ and the height h₂ of the second expansion block 21 in said radial direction relative to said channel 17, the connector 18 may be optimized in terms of strength in relation to its size. In other words, for connectors 18 having the same strength, the total height of the connector 18 according to the invention in radial direction relative to said channel may be significantly smaller than the height of the connector disclosed in the closest prior art document WO 2020/035770 A1.

A connector 18 having a smaller height results in a more compact connector 18 that requires less material and that is moreover lighter in weight and therefore easier to handle by personnel installing the connectors 18. Moreover, a smaller and more compact connector 18 not only saves materials for the connector 18 itself, but also in the first member 10 and the second member 11 of the assembly.

Besides providing an optimized connector 18, the connector 18 according to the present invention is able to maintain as much as possible of the above mentioned advantages of the closest prior art WO 2020/035770 A1.

In the expanded state of the connector 18, it pushes against faces 19 of the passages 14 of the second member 11 that are directed away from the main body 12 thereof to define the pre-tensioned connection between the first member 10 and the second member 11.

In the expanded state of the connector 18, wherein the connection between the first member 10 and the second member 11 is pre-tensioned, the passage 16 of the first member 10 is arranged at an offset relative to the passages 14 in the second member 11. This offset is arranged in the radial direction relative to the channel 17.

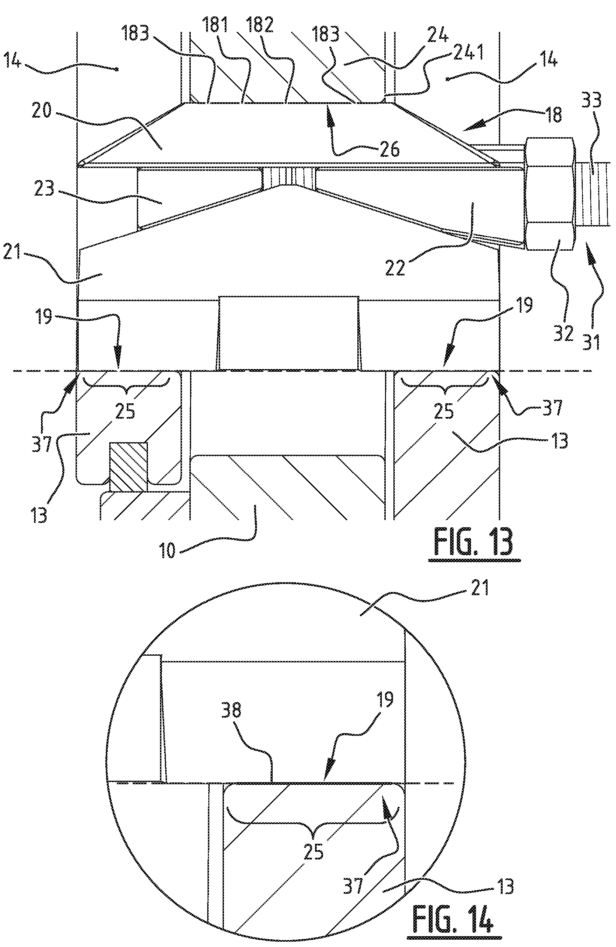

The connector 18 comprises a compacted state, wherein the connector 18 has a size that is freely insertable into and out of the channel 17 (Figure 9), and a connecting state, wherein the connector 18 is radially expanded in the channel 17 to connect the first 10 and second member 11 relative to each other (Figure 13 and 14).

At the cross section CS halfway the length L of the connector 18, the height h₁ of the first expansion block 20 in the radial direction relative to said channel 17 is preferably equal to or less than 66% of the height h₂ of the second expansion block 21 in said radial direction relative to said channel 17. The position of this cross section CS halfway the length L of the connector 18 is arranged at or near the middle of the face 15 of the main body 12 of the second member 11. As explained above, at this position, forces passing through the first expansion block 20 are only of a limited magnitude, whereas the bending forces experienced by the second expansion block 21 reach a maximum value at this position.

At the cross section CS halfway the length L of the connector 18, the cross sectional area A₁ of the first expansion block 20 is preferably equal to or less than 66% of the cross sectional area A₂ of the second expansion block 21. A larger cross sectional area is related to an increased bending strength.

In a preferred embodiment, the height h₁ of the first expansion block 20 in the radial direction relative to said channel 17 is, at a cross section CS halfway the length L of the connector 18, at least 50% of a radius of a side of the passage 14 in the first member 10 that is directed towards the main body 12 of the second member 11. However, even more preferably the height h₁ of the first expansion block 20 in the radial direction relative to said channel 17 is, at the cross section CS halfway the length L of the connector 18, in the range of 100% - 125% of the radius of the side of the passage 14 in the first member 10 that is directed towards the main body 12 of the second member 11. In the shown embodiment, the height h₁ is about 100% of the radius of the side of the passage 14, which allows the first expansion block 20 to abut against substantially the full area of a face 26 of the end portion 24 of the first member 10 and distribute the forces over a maximum area, while at the same time allowing the height h₁ of the first expansion block 20 to be as small as possible. If the first expansion block 20 is strong enough to withstand the forces it is exposed to at this height h₁, there is no need to further increase the height h₁. The smaller the height h₁ of the first expansion block 20, the more compact and lightweight the connector 18 may be.

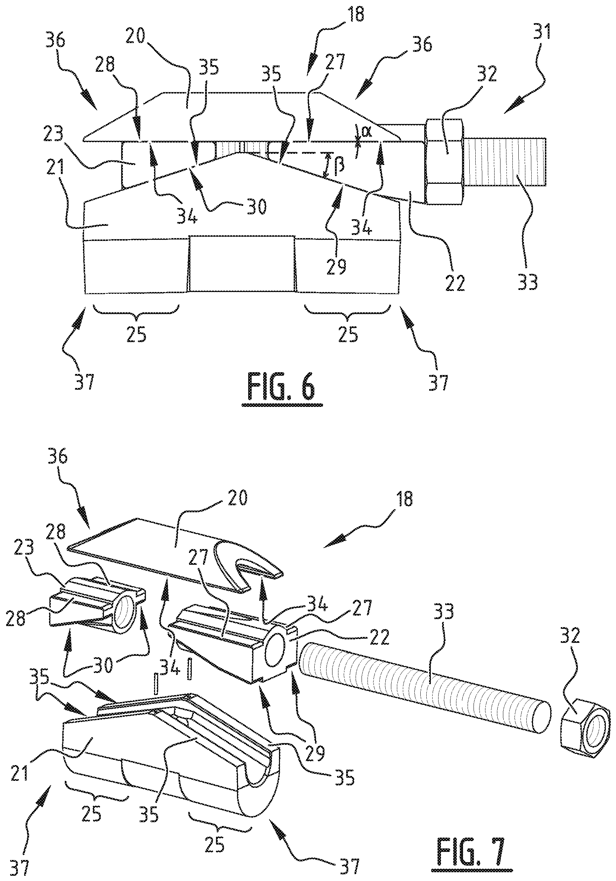

The connector 18 is shown in great detail in Figures 4-7. The one or more than one wedge 22, 23 comprises a first sliding surface 27, 28 in contact with the first expansion block 20 and a second sliding surface 29, 30 that is in contact with the second expansion block 21. The shown connector 18 comprises a wedge 22, 23 on either side relative to the cross section CS halfway the length L of the connector 18. These wedges 22, 23 are arranged in a mirrored arrangement relative to the cross section CS halfway the length L of the connector 18. The first sliding surfaces 27, 28 of the wedges 22, 23 slide along sliding surfaces 34 of the first expansion block 20. Likewise, the second sliding surface 29, 30 of the wedges 22, 23 slide along sliding surfaces 35 of the second expansion block 21 (Figures 6 and 7).

Although both wedges 22, 23 may be identical in size, this is not the case in the shown embodiment. The wedge 22 exhibits a greater length to make it easily accessible and actuated by an actuator 31, which is embodied as a nut 32 that may be driven along a threaded rod 33. However, the opposite wedge 23, that doesn't need to be readily accessible, may deliberately be designed smaller to save weight and design the connector 18 as lightweight as possible.

The first sliding surface 27, 28 encloses a first angle α relative to the longitudinal direction of the channel 17, and the second sliding surface 29, 30 encloses a second angle β relative to the longitudinal direction of the channel 17, wherein the first angle α is smaller than the second angle β. The larger height h₂ of the second expansion block 21, that is required to provide sufficient bending strength, may also be used to accommodate a wedge 22, 23 requiring a relatively large second angle β. In this way, the radial expansion range of the connector 18 may be provided primarily or even fully by the larger second expansion block 21, allowing the height h₁ of the first expansion block 20 to be as small as possible. The first angle α being smaller than the second angle β thus allows the connector 18 to be optimized terms in of strength in relation to its size.

The first angle α is in the range of 0 - 15°, and preferably in the range of 0 - 5°. In the shown preferred embodiment, the first angle α is about 0°, which allows the first expansion block 20 to be designed with a minimum height h₁.

The second angle β is in the range of 5 - 30°, which allows for a sufficient radial expansion range of the connector 18, even if the first angle α is in the range of 0 - 15°.

In order to further reduce the weight of the connector 18, the height h₁ of first expansion block 20 may reduce towards one or more than one longitudinal end 36 thereof.

A method of assembling the first member 10 and the second member 11 is now described with reference to Figures 8-14.

Figure 8 shows the step of arranging the first member 10 between the two walls 13 of the second member 11.

The next step comprises positioning the passages 14, 16 of the first 10 and the second member 11 to define a channel 17 (Figure 9). Figure 9 also shows the step of providing a connector 18 that comprises a first expansion block 20, a second expansion bock 21, and one or more than one wedge 22, 23. The first expansion block 20 is configured to push the first member 10 against the face 15 of the main body 12 of the second member 11, and the second expansion block 21 is configured to contact faces 19 defined by the passages 14 in the substantially parallel walls 13 of the second member 11. The one or more than one wedge 22, 23 is arranged in between the first expansion block 20 and the second expansion block 21, and is configured to be displaced longitudinally relative to the channel 17 to thereby radially expand the connector 18. According to the invention, this step of providing the connector 18 comprises providing a connector 18 of which, at a cross section CS halfway the length L of the connector 18, the cross sectional area A₁ and the height h₁ in the radial direction relative to said channel 17 of the first expansion block 20 is smaller than the cross sectional area A₂ and the height h₂ in said radial direction relative to said channel 19 of the second expansion block 21.

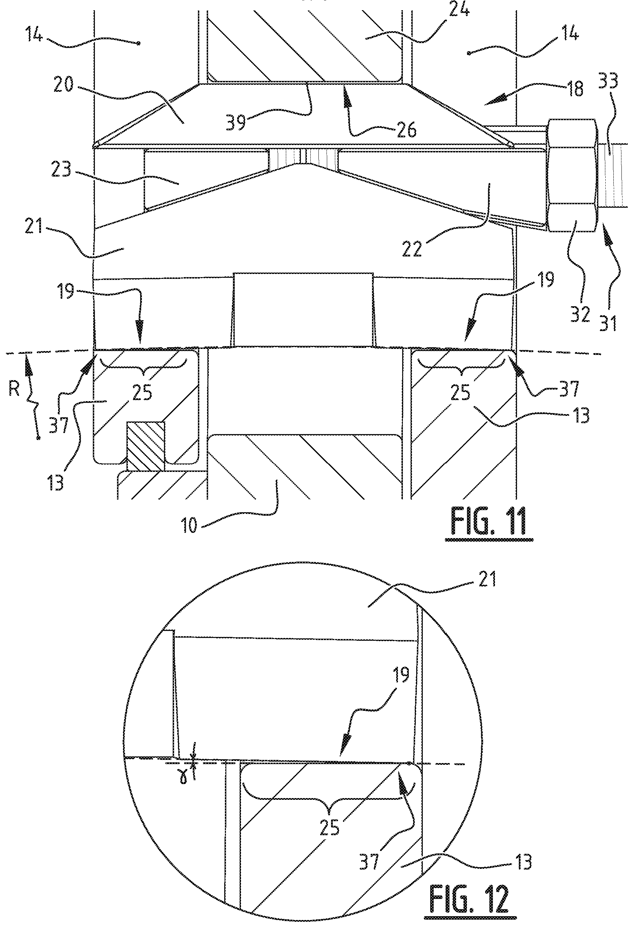

The previous step is followed by inserting the connector 18 into the channel 17 to an end position (Figure 10). In Figure 10, the connector 18 is still in a compacted state, wherein the connector 18 has a size that is freely insertable into and out of the channel 17. Figure 11 is a detailed cross sectional view of Figure 10, showing that there is still a gap 39 in between the first expansion block 20 and the face 26 of the end portion 24 of the first member 10.

The next steps comprise the step of consecutively expanding said connector 18 radially relative to said channel 17, to thereby connect the first member 10 and the second member 11 relative to each other, and the expanded connector 18 pushing the first member 10 in a radial direction relative to said channel 17 against the face 15 of the main body 12 of the second member 11 to define a clamping contact and thereby a pre-tensioned connection in a radial direction relative to said channel 17 between the face 15 of the main body 12 of the second member 11 and the faces 19 defined by the passages 14 in the substantially parallel walls 13 of the second member 11.

In the shown preferred embodiment, the second expansion block 21 is configured to abut the faces 19 defined by the passages 14 in the substantially parallel walls 13 of the second member 11 only at or near longitudinal ends 37 of said second expansion block 21 when the connector 18 is in an unloaded state, i.e. the compacted state, prior to the connector 18 being expanded to the expanded state thereof. Thus, for the method, the step of inserting the connector 18 into the channel 17 to an end position comprises an end position wherein the second expansion block 21 abuts the faces 19 defined by the passages 14 in the substantially parallel walls 13 of the second member 11 only at or near longitudinal ends 37 of said second expansion block 21 when the connector is in an unloaded state. This is the state shown in Figure 10, and in more detail in Figures 11 and 12. Only at or near longitudinal ends 37 is interpreted as a contact surface between the outer end 25 of the second expansion block 21 and the face 19 extending over less than 25% of the length of the faces 19 in the longitudinal direction of the channel 17.

In the shown preferred embodiment, the second expansion block 21 is configured to abut the faces 19 defined by the passages 14 in the substantially parallel walls 13 of the second member 21 over at least half of the length of said faces 19 when the connector 18 is radially expanded to the expanded state to define the pre-tensioned connection. Thus, for the method, the step of the expanded connector 18 pushing the first member 10 in a radial direction relative to said channel 17 comprises deforming the second expansion block 21 of the connector 18 until the second expansion block 21 abuts the faces 19 defined by the passages 14 in the substantially parallel walls 13 of the second member 11 over at least half of the length of said faces 19 when the connector 18 is radially expanded to the expanded state to define the pre-tensioned connection. This is the state shown in Figures 13-15. In the detailed view of Figure 14, the contact surface 38 between the outer end 25 of the second expansion block 21 and the face 19 had increased due to the deformation of the second expansion bock 21. As result of this deformation, the contact surface 38 now extends over substantially the full length of the face 19 in the longitudinal direction of the channel 17.

By starting the initial contact only at or near the longitudinal ends 37 of the second expansion block 21, and due to the contact surface 38 between the outer end 25 of the second expansion block 21 and the faces 19 of the second member 11 only gradually increasing when the second expansion block 21 deforms when the bending forces increase, it is prevented that the substantially parallel walls 13 of the second member 21 are pushed away from each other, i.e. outward relative to the longitudinal direction of the channel 17. As a result, the thickness of the walls 13 of the second member 21 that extends parallel to the longitudinal direction of the channel 17 may be reduced. Consequently, the second member 11 may be designed lighter, saving material. Starting the initial contact only at or near the longitudinal ends 37 of the second expansion block allows for a more homogeneous pressure distribution between the second member 21 and the faces 19, thereby reducing the risk of significant plastic deformation.

The outer end 25 of the second expansion block 21 and the faces 19 defined by the passages 14 in the substantially parallel walls 13 of the second member 11 preferably enclose an angle γ ≤ 2° upon initial contact in the unloaded state of the connector 18.

Although the faces 19 may be machined to provide the angle γ, this angle γ is preferably defined by a corresponding shape or curvature R (see Figure 11) of at least the out end of the second expansion block 21. It is easier to machine the second expansion blocks 21 during manufacture and prior to assembling the connector 18, than it is to machine the faces 19 in the passages 14. In case of a curvature R, the angle γ is defined by the tangent at the contact between the outer end 25 of the second expansion block 21 and the faces 19 of the second member 11.

The material of the second expansion block 21 may exhibit a higher yield strength than the material of first expansion block 20.

In a preferred embodiment (as best seen in figure 13), the first expansion block 18 comprises an abutting surface 181 that is configured to abut the first member 24 when the connector is radially expanded to the expanded state to define the pre-tensioned connection. The abutting surface 181 may be shaped such that, in the compacted state, a distance between the abutting surface 181 and the first member 24 in the radial direction is smaller between a central portion 182 of the abutting surface, that is preferably arranged near the longitudinal center of the first expansion block 18, and the first member 24 than between an outer portion 183 of the abutting surface 181, that is preferably arranged further from the longitudinal center (i.e. as seen along the longitudinal direction of the channel 17) of the first expansion block 18, and the first member 24. Hereby, upon tensioning the connector, the central portion 182 is first to abut the first member 24 and the outer portion 183 abuts said first member 24 at a later stage, thereby reducing stress concentrations, when in the pre-tensioned state, in the edges 241 of the first member 24. Hereby, the central portion 182 preferably extends, in the radial direction towards the first member 24, 4 mm or less, more preferably 2 mm or less, most preferably 1 mm or less, preferably at least 0.01 mm, more preferably at least 0.1 mm, further than the outer portion 183. To this end, the abutting surface 181 preferably has a curvature, around an axis that is substantially perpendicular to the longitudinal direction of the channel 17 and substantially perpendicular to the radial direction, wherein said curvature preferably has a radius of at least 900 mm.

The above described embodiment is intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. The scope of protection is defined solely by the following claims.

## Claims

1. Assembly, comprising:
- a first member (10) and a second member (11), wherein;
- the second member (11) has a fork-shaped cross section with a main body (12) arranged between two substantially parallel walls (13) that each comprise at least one passage (14);
- the first member (10) is arranged between the two walls (13) of the second member (11) in abutting contact with a face (15) of the main body (12) of the second member (11), the first member (10) comprising a passage (16);
- said passage (16) of the first member (10) and the passages (14) of the second member (11) define a channel (17);
- a connector (18) that is axially insertable into said channel (17) to an end position and consecutively expandable radially relative to said channel (17), to connect the first and second member (10, 11) relative to each other by pushing, in an expanded state of the connector (18), the first member (10) in a radial direction relative to said channel (17) against the face (15) of the main body (12) of the second member (11) to define a clamping contact and thereby a pre-tensioned connection in said radial direction relative to said channel (17) between the face (15) of the main body (12) of the second member (11) and faces defined by the passages in the substantially parallel walls (13) of the second member (11);
- wherein said connector (18) exhibits a length extending in a longitudinal direction of the channel (17) and comprises:
- a first expansion block (20) that is configured to push the first member (10) against the face (15) of the main body (12) of the second member (11);
- a second expansion block (21) that is configured to contact the faces defined by the passages (14) in the substantially parallel walls (13) of the second member (11); and
- one or more than one wedge (22, 23) that is arranged in between the first expansion block (20) and the second expansion block (21), and that is configured to be displaced longitudinally relative to the channel (17) to thereby radially expand the connector (18) relative to the channel (17),
**characterized in that,** at a cross section halfway the length of the connector (18), a cross sectional area and a height of the first expansion block (20) in the radial direction relative to said channel (17) is smaller than a cross sectional area and a height of the second expansion block (21) in said radial direction relative to said channel (17).

2. Assembly according to claim 1, wherein, at the cross section halfway the length of the connector (18):
the height of the first expansion block (20) in the radial direction relative to said channel (17) is equal to or less than 66% of the height of the second expansion block (21) in said radial direction relative to said channel (17); and/or
the cross sectional area of the first expansion block (20) is equal to or less than 66% of the cross sectional area of the second expansion block (21); and/or
the height of the first expansion block (20) in the radial direction relative to said channel (17) is at least 50% of a radius of a side of the passage (16) in the first member (10) that is directed towards the main body (12) of the second member (11), preferably wherein at the cross section halfway the length of the connector (18), the height of the first expansion block (20) in the radial direction relative to said channel (17) is in the range of 100% - 125% of the radius of the side of the passage (16) in the first member (10) that is directed towards the main body (12) of the second member (11).

3. Assembly according to one or more than one of the foregoing claims, wherein:
- the one or more than one wedge (22, 23) comprises a first sliding surface (27, 28) in contact with the first expansion block (20) and a second sliding surface (29, 30) that is in contact with the second expansion block (21);
- the first sliding surface (27, 28) encloses a first angle α relative to the longitudinal direction of the channel (17);
- the second sliding surface (29, 30) encloses a second angle β relative to the longitudinal direction of the channel (17); and
- the first angle α is smaller than the second angle β, preferably wherein:
the first angle α is in the range of 0 - 15°, and preferably in the range of 0 - 5°; and/or
the second angle β is in the range of 5 - 30°.

4. Assembly according to one or more than one of the foregoing claims, wherein the connector (18) comprises a wedge (22, 23) on either side relative to the cross section halfway the length of the connector (18), preferably wherein the wedges (22, 23) are arranged in a mirrored arrangement relative to the cross section halfway the length of the connector (18).

5. Assembly according to one or more than one of the foregoing claims, wherein the height of first expansion block (20) reduces towards one or more than one longitudinal end thereof.

6. Assembly according to one or more than one of the foregoing claims, wherein the second expansion block (21) is configured to abut the faces defined by the passages (14) in the substantially parallel walls (13) of the second member (11) only at or near longitudinal ends of said second expansion block (21) when the connector (18) is in an unloaded state, prior to the connector (18) being expanded to the expanded state thereof.

7. Assembly according to one or more than one of the foregoing claims, wherein the second expansion block (21) is configured to abut the faces defined by the passages (14) in the substantially parallel walls (13) of the second member (11) over at least half of the length of said faces when the connector (18) is radially expanded to the expanded state to define the pre-tensioned connection.

8. Assembly according to one or more than one of the foregoing claims, wherein an outer end of the second expansion block (21) and the faces defined by the passages (14) in the substantially parallel walls (13) of the second member (11) enclose an angle γ ≤ 2° upon initial contact in the unloaded state of the connector (18).

9. Assembly according to claim 8, wherein the angle γ is defined by a corresponding shape or curvature of at least an outer end of the second expansion block (21).

10. Assembly according to one or more than one of the foregoing claims, wherein the material of the second expansion block (21) exhibits a higher yield strength than the material of first expansion block (20).

11. Assembly according to one or more than one of the foregoing claims, wherein the first expansion block (20) comprises an abutting surface that is configured to abut the first member (10) when the connector (18) is radially expanded to the expanded state to define the pre-tensioned connection;
wherein the abutting surface is shaped such that, in the compacted state, a distance between the abutting surface and the first member (10) in the radial direction is smaller between a central portion of the abutting surface, that is preferably arranged near the longitudinal center of the first expansion block (20), and the first member (10) than between an outer portion of the abutting surface, that is preferably arranged further from the longitudinal center of the first expansion block (20), and the first member (10).

12. Method of assembling a first and a second member (10, 11) that each comprise at least one passage (14, 16), wherein the second member (11) has a fork-shaped cross section with a main body (12) arranged between two substantially parallel walls (13) that each comprise at least one passage (14), said method comprising the steps of:
- arranging the first member (10) between the two walls (13) of the second member (11);
- positioning the passages (14, 16) of the first and the second member (10, 11) to define a channel (17);
- providing a connector (18) that comprises:
- a first expansion block (20) that is configured to push the first member (10) against a face (15) of the main body (12) of the second member (11);
- a second expansion block (21) that is configured to contact faces defined by the passages (14) in the substantially parallel walls (13) of the second member; and
- one or more than one wedge (22, 23) that is arranged in between the first expansion block (20) and the second expansion block (21), and that is configured to be displaced longitudinally relative to the channel (17) by an actuator to thereby radially expand the connector (18);
- inserting the connector (18) into the channel (17) to an end position;
- consecutively expanding said connector (18) radially relative to said channel (17), to thereby connect the first and second member (10, 11) relative to each other; and
- the expanded connector (18) pushing the first member (10) in a radial direction relative to said channel (17) against the face (15) of the main body (12) of the second member (11) to define a clamping contact and thereby a pre-tensioned connection in the radial direction relative to said channel (17) between the face (15) of the main body (12) of the second member (11) and faces defined by the passages (14) in the substantially parallel walls (13) of the second member (11),
**characterized in that**
the step of providing the connector (18) comprises providing a connector (18) of which, at a cross section halfway the length of the connector (18), the cross sectional area and the height of the first expansion block (20) in the radial direction relative to said channel (17) is smaller than the cross sectional area and the height of the second expansion block (21) in said radial direction relative to said channel (17).

13. Method according to claim 12, wherein the step of inserting the connector (18) into the channel (17) to an end position comprises an end position wherein the second expansion block (21) abuts the faces defined by the passages (14) in the substantially parallel walls (13) of the second member (11) only at or near longitudinal ends of said second expansion block (21) when the connector (18) is in an unloaded state.

14. Method according to claim 13, wherein the step of the expanded connector (18) pushing the first member (10) in the radial direction relative to said channel (17) comprises deforming the second expansion block (21) of the connector (18) until the second expansion block (21) abuts the faces defined by the passages (14) in the substantially parallel walls (13) of the second member (11) over at least half of the length of said faces when the connector (18) is radially expanded to the expanded state to define the pre-tensioned connection.

15. Method according to any of claims 12-14, further comprising at least one of:
- providing a connector (18) of or for an assembly according to any of claims 1-11; and
- assembling an assembly according to any of claims 1-11.

## Patentansprüche

1. Anordnung, umfassend:
- ein erstes Element (10) und ein zweites Element (11), wobei;
- das zweite Element (11) einen gabelförmigen Querschnitt mit einem Hauptkörper (12) aufweist, der zwischen zwei im Wesentlichen parallelen Wänden (13) angeordnet ist, die jeweils mindestens einen Durchgang (14) umfassen;
- das erste Element (10) zwischen den beiden Wänden (13) des zweiten Elements (11) in Anlagekontakt mit einer Fläche (15) des Hauptkörpers (12) des zweiten Elements (11) angeordnet ist, wobei das erste Element (10) einen Durchgang (16) umfasst;
- wobei der Durchgang (16) des ersten Elements (10) und die Durchgänge (14) des zweiten Elements (11) einen Kanal (17) definieren;
- einen Verbinder (18), der axial in den Kanal (17) bis zu einer Endposition einführbar und anschließend radial relativ zu dem Kanal (17) ausdehnbar ist, um das erste und das zweite Element (10, 11) relativ zueinander zu verbinden, indem im ausgedehnten Zustand des Verbinders (18) das erste Element (10) in radialer Richtung relativ zu dem Kanal (17) gegen die Fläche (15) des Hauptkörpers (12) des zweiten Elements (11) gedrückt wird, um einen Klemmkontakt und dadurch eine vorgespannte Verbindung in radialer Richtung relativ zu dem Kanal (17) zwischen der Fläche (15) des Hauptkörpers (12) des zweiten Elements (11) und den durch die Durchgänge in den im Wesentlichen parallelen Wänden (13) des zweiten Elements (11) definierten Flächen zu definieren;
- wobei der Verbinder (18) eine Länge aufweist, die sich in Längsrichtung des Kanals (17) erstreckt und umfasst:
- einen ersten Erweiterungsblock (20), der konfiguriert ist, um das erste Element (10) gegen die Fläche (15) des Hauptkörpers (12) des zweiten Elements (11) zu drücken;
- einen zweiten Erweiterungsblock (21), der konfiguriert ist, um die durch die Durchgänge (14) in den im Wesentlichen parallelen Wänden (13) des zweiten Elements (11) definierten Flächen zu berühren; und
- einen oder mehrere Keile (22, 23), der/die zwischen dem ersten Erweiterungsblock (20) und dem zweiten Erweiterungsblock (21) angeordnet und konfiguriert ist/sind, um in Längsrichtung relativ zum Kanal (17) verschoben werden zu können, um dadurch den Verbinder (18) relativ zum Kanal (17) radial auszudehnen,
**dadurch gekennzeichnet, dass** an einem Querschnitt auf halber Länge des Verbinders (18) eine Querschnittsfläche und eine Höhe des ersten Erweiterungsblocks (20) in radialer Richtung relativ zum Kanal (17) kleiner ist als eine Querschnittsfläche und eine Höhe des zweiten Erweiterungsblocks (21) in radialer Richtung relativ zum Kanal (17).

2. Anordnung nach Anspruch 1, wobei im Querschnitt auf halber Länge des Verbinders (18):
die Höhe des ersten Erweiterungsblocks (20) in radialer Richtung relativ zum Kanal (17) gleich oder kleiner als 66 % der Höhe des zweiten Erweiterungsblocks (21) in radialer Richtung relativ zum Kanal (17) ist; und/oder
die Querschnittsfläche des ersten Erweiterungsblocks (20) gleich oder kleiner ist als 66 % der Querschnittsfläche des zweiten Erweiterungsblocks (21); und/oder
die Höhe des ersten Erweiterungsblocks (20) in radialer Richtung relativ zum Kanal (17) mindestens 50 % eines Radius einer Seite des Durchgangs (16) im ersten Element (10) beträgt, die zum Hauptkörper (12) des zweiten Elements (11) gerichtet ist, wobei vorzugsweise im Querschnitt auf halber Länge des Verbinders (18) die Höhe des ersten Erweiterungsblocks (20) in radialer Richtung relativ zum Kanal (17) im Bereich von 100 % bis 125 % des Radius der Seite des Durchgangs (16) im ersten Element (10) liegt, die zum Hauptkörper (12) des zweiten Elements (11) gerichtet ist.

3. Anordnung nach einem oder mehreren der vorstehenden Ansprüche, wobei: - der eine oder die mehreren Keile (22, 23) eine erste Gleitfläche (27, 28), die den ersten Erweiterungsblock (20) berührt, und eine zweite Gleitfläche (29, 30), die den zweiten Erweiterungsblock (21) berührt, umfassen;
- die erste Gleitfläche (27, 28) einen ersten Winkel α relativ zur Längsrichtung des Kanals (17) einschließt;
- die zweite Gleitfläche (29, 30) einen zweiten Winkel β relativ zur Längsrichtung des Kanals (17) einschließt; und
- der erste Winkel α kleiner ist als der zweite Winkel β, vorzugsweise wobei:
der erste Winkel α im Bereich von 0 bis 15°, und vorzugsweise im Bereich von 0 bis 5° liegt; und/oder
der zweite Winkel β im Bereich von 5 bis 30° liegt.

4. Anordnung nach einem oder mehreren der vorstehenden Ansprüche, wobei der Verbinder (18) bezogen auf den Querschnitt auf halber Länge des Verbinders (18) beidseitig je einen Keil (22, 23) aufweist, wobei die Keile (22, 23) bezogen auf den Querschnitt auf halber Länge des Verbinders (18) vorzugsweise spiegelbildlich angeordnet sind.

5. Anordnung nach einem oder mehreren der vorstehenden Ansprüche, wobei die Höhe des ersten Erweiterungsblocks (20) zu einem oder mehreren Längsenden hin abnimmt.

6. Anordnung nach einem oder mehreren der vorstehenden Ansprüche, wobei der zweite Erweiterungsblock (21) konfiguriert ist, um an den durch die Durchgänge (14) in den im Wesentlichen parallelen Wänden (13) des zweiten Elements (11) definierten Flächen nur an oder in der Nähe der Längsenden des zweiten Erweiterungsblocks (21) anzuliegen, wenn sich der Verbinder (18) in einem unbelasteten Zustand befindet, bevor der Verbinder (18) in seinen ausgedehnten Zustand ausgedehnt wird.

7. Anordnung nach einem oder mehreren der vorstehenden Ansprüche, wobei der zweite Erweiterungsblock (21) konfiguriert ist, um an den durch die Durchgänge (14) in den im Wesentlichen parallelen Wänden (13) des zweiten Elements (11) definierten Flächen über mindestens die Hälfte der Länge dieser Flächen anzuliegen, wenn der Verbinder (18) radial in den ausgedehnten Zustand ausgedehnt wird, um die vorgespannte Verbindung zu definieren.

8. Anordnung nach einem oder mehreren der vorstehenden Ansprüche, wobei ein äußeres Ende des zweiten Erweiterungsblocks (21) und die durch die Durchgänge (14) in den im Wesentlichen parallelen Wänden (13) des zweiten Elements (11) definierten Flächen beim ersten Kontakt im unbelasteten Zustand des Verbinders (18) einen Winkel γ ≤ 2° einschließen.

9. Anordnung nach Anspruch 8, wobei der Winkel γ durch eine entsprechende Form oder Krümmung zumindest eines äußeren Endes des zweiten Erweiterungsblocks (21) definiert ist.

10. Anordnung nach einem oder mehreren der vorstehenden Ansprüche, wobei das Material des zweiten Erweiterungsblocks (21) eine höhere Streckgrenze aufweist als das Material des ersten Erweiterungsblocks (20).

11. Anordnung nach einem oder mehreren der vorstehenden Ansprüche, wobei der erste Erweiterungsblock (20) eine Anlagefläche umfasst, die konfiguriert ist, um an dem ersten Element (10) anzuliegen, wenn der Verbinder (18) radial in den ausgedehnten Zustand ausgedehnt wird, um die vorgespannte Verbindung zu definieren;
wobei die Anlagefläche so geformt ist, dass im verdichteten Zustand ein Abstand zwischen der Anlagefläche und dem ersten Element (10) in der radialen Richtung zwischen einem mittleren Abschnitt der Anlagefläche, der vorzugsweise nahe der Längsmitte des ersten Erweiterungsblocks (20) angeordnet ist, und dem ersten Element (10) kleiner ist als zwischen einem äußeren Abschnitt der Anlagefläche, der vorzugsweise weiter von der Längsmitte des ersten Erweiterungsblocks (20) entfernt angeordnet ist, und dem ersten Element (10).

12. Verfahren zum Anordnen eines ersten und zweiten Elements (10, 11), die jeweils mindestens einen Durchgang (14, 16) umfassen, wobei das zweite Element (11) einen gabelförmigen Querschnitt mit einem Hauptkörper (12) aufweist, der zwischen zwei im Wesentlichen parallelen Wänden (13) angeordnet ist, die jeweils mindestens einen Durchgang (14) umfassen, das Verfahren umfassend die Schritte:
- Anordnen des ersten Elements (10) zwischen den zwei Wänden (13) des zweiten Elements (11);
- Positionieren der Durchgänge (14, 16,) des ersten und des zweiten Elements (10, 11), um einen Kanal (17) zu definieren;
- Bereitstellen eines Verbinders (18), der umfasst:
- einen ersten Erweiterungsblock (20), der konfiguriert ist, um das erste Element (10) gegen eine Fläche (15) des Hauptkörpers (12) des zweiten Elements (11) zu drücken;
- einen zweiten Erweiterungsblock (21), der konfiguriert ist, um Flächen zu berühren, die durch die Durchgänge (14) in den im Wesentlichen parallelen Wänden (13) des zweiten Elements definiert sind; und
- einen oder mehrere Keile (22, 23), der/die zwischen dem ersten Erweiterungsblock (20) und dem zweiten Erweiterungsblock (21) angeordnet und konfiguriert ist/sind, um durch einen Aktuator in Längsrichtung relativ zum Kanal (17) verschoben zu werden, um dadurch den Verbinder (18) radial auszudehnen;
- Einführen eines Verbinders (18) in den Kanal (17) bis zu einer Endposition;
- anschließendes Ausdehnen des Verbinders (18) relativ zu dem Kanal (17), um dadurch das erste und das zweite Element (10, 11) relativ zueinander zu verbinden; und
- der ausgedehnte Verbinder (18) das erste Element (10) in einer radialen Richtung relativ zu dem Kanal (17) gegen die Fläche (15) des Hauptkörpers (12) des zweiten Elements (11) drückt, um einen Klemmkontakt und dadurch eine vorgespannte Verbindung in der radialen Richtung relativ zu dem Kanal (17) zwischen der Fläche (15) des Hauptkörpers (12) des zweiten Elements (11) und Flächen, die durch die in den im Wesentlichen parallelen Wänden (13) des zweiten Elements (11) definierten Durchgänge (14) definiert werden, zu definieren, **dadurch gekennzeichnet, dass**
der Schritt des Bereitstellens des Verbinders (18) das Bereitstellen eines Verbinders (18) umfasst, bei dem an einem Querschnitt auf halber Länge des Verbinders (18) die Querschnittsfläche und die Höhe des ersten Erweiterungsblocks (20) in radialer Richtung relativ zum Kanal (17) kleiner ist als die Querschnittsfläche und die Höhe des zweiten Erweiterungsblocks (21) in radialer Richtung relativ zum Kanal (17).

13. Verfahren nach Anspruch 12, wobei der Schritt des Einführens des Verbinders (18) in den Kanal (17) bis zu einer Endposition eine Endposition umfasst, in der der zweite Erweiterungsblock (21) an den durch die Durchgänge (14) in den im Wesentlichen parallelen Wänden (13) des zweiten Elements (11) definierten Flächen nur an oder in der Nähe der Längsenden des zweiten Erweiterungsblocks (21) anliegt, wenn sich der Verbinder (18) in einem unbelasteten Zustand befindet.

14. Verfahren nach Anspruch 13, wobei der Schritt, bei dem der ausgedehnte Verbinder (18) das erste Element (10) in die radiale Richtung relativ zum Kanal (17) drückt, das Verformen des zweiten Erweiterungsblocks (21) des Verbinders (18) umfasst, bis der zweite Erweiterungsblock (21) an den Flächen anliegt, die durch die Durchgänge (14) in den im Wesentlichen parallelen Wänden (13) des zweiten Elements (11) definiert sind, und zwar über mindestens die Hälfte der Länge der Flächen, wenn der Verbinder (18) radial in den ausgedehnten Zustand ausgedehnt wird, um die vorgespannte Verbindung zu definieren.

15. Verfahren nach einem der Ansprüche 12 bis 14, ferner mindestens eines von Folgendem umfassend:
- Bereitstellen eines Verbinders (18) einer oder für eine Anordnung nach einem der Ansprüche 1 bis 11; und
- Anordnen einer Anordnung nach einem der Ansprüche 1 bis 11.

## Revendications

1. Ensemble, comprenant :
- un premier élément (10) et un second élément (11), dans lequel ;
- le second élément (11) a une section transversale en forme de fourche avec un corps principal (12) agencé entre deux parois (13) sensiblement parallèles qui comprennent chacune au moins un passage (14) ;
- le premier élément (10) est agencé entre les deux parois (13) du second élément (11) en contact de butée avec une face (15) du corps principal (12) du second élément (11), le premier élément (10) comprenant un passage (16) ;
- ledit passage (16) du premier élément (10) et les passages (14) du second élément (11) définissent un canal (17) ;
- un raccord (18) qui est axialement insérable dans ledit canal (17) jusqu'à une position d'extrémité et consécutivement expansible radialement par rapport audit canal (17), pour raccorder le premier et le second élément (10, 11) l'un par rapport à l'autre en poussant, dans un état expansé du raccord (18), le premier élément (10) dans une direction radiale par rapport audit canal (17) contre la face (15) du corps principal (12) du second élément (11) pour définir un contact de serrage et de ce fait un raccordement précontraint dans ladite direction radiale par rapport audit canal (17) entre la face (15) du corps principal (12) du second élément (11) et les faces définies par les passages dans les parois (13) sensiblement parallèles du second élément (11) ;
- dans lequel ledit raccord (18) présente une longueur s'étendant dans une direction longitudinale du canal (17) et comprend :
- un premier bloc d'expansion (20) qui est conçu pour pousser le premier élément (10) contre la face (15) du corps principal (12) du second élément (11) ;
- un second bloc d'expansion (21) qui est conçu pour entrer en contact avec les faces définies par les passages (14) dans les parois (13) sensiblement parallèles du second élément (11) ; et
- une ou plus d'une cale (22, 23) qui est agencée entre le premier bloc d'expansion (20) et le second bloc d'expansion (21), et qui est conçue pour être déplacée longitudinalement par rapport au canal (17) afin d'expanser de ce fait radialement le raccord (18) par rapport au canal (17),
**caractérisé en ce que,** au niveau d'une section transversale à mi-chemin de la longueur du raccord (18), une aire de section transversale et une hauteur du premier bloc d'expansion (20) dans la direction radiale par rapport audit canal (17) sont plus petites qu'une aire en section transversale et une hauteur du second bloc d'expansion (21) dans ladite direction radiale par rapport audit canal (17).

2. Ensemble selon la revendication 1, dans lequel, au niveau de la section transversale à mi-chemin de la longueur du raccord (18) :
la hauteur du premier bloc d'expansion (20) dans la direction radiale par rapport audit canal (17) est égale ou inférieure à 66 % de la hauteur du second bloc d'expansion (21) dans ladite direction radiale par rapport audit canal (17) ; et/ou
l'aire en section transversale du premier bloc d'expansion (20) est égale ou inférieure à 66 % de l'aire en section transversale du second bloc d'expansion (21) ; et/ou
la hauteur du premier bloc d'expansion (20) dans la direction radiale par rapport audit canal (17) est d'au moins 50 % d'un rayon d'un côté du passage (16) dans le premier élément (10) qui est dirigé vers le corps principal (12) du second élément (11), de préférence dans lequel au niveau de la section transversale à mi-chemin de la longueur du raccord (18), la hauteur du premier bloc d'expansion (20) dans la direction radiale par rapport audit canal (17) est dans la plage de 100 % à 125 % du rayon du côté du passage (16) dans le premier élément (10) qui est dirigé vers le corps principal (12) du second élément (11).

3. Ensemble selon une ou plus d'une des revendications précédentes, dans lequel :
- l'une ou plus d'une cale (22, 23) comprend une première surface de glissement (27, 28) en contact avec le premier bloc d'expansion (20) et une seconde surface de glissement (29, 30) qui est en contact avec le second bloc d'expansion (21) ;
- la première surface de glissement (27, 28) enferme un premier angle α par rapport à la direction longitudinale du canal (17) ;
- la seconde surface de glissement (29, 30) enferme un second angle β par rapport à la direction longitudinale du canal (17) ; et
- le premier angle α est plus petit que le second angle β, de préférence dans lequel :
le premier angle α est dans la plage de 0 à 15°, et de préférence dans la plage de 0 à 5° ; et/ou
le second angle β est dans la plage de 5 à 30°.

4. Ensemble selon une ou plus d'une des revendications précédentes, dans lequel le raccord (18) comprend une cale (22, 23) de chaque côté par rapport à la section transversale à mi-chemin de la longueur du raccord (18), de préférence dans lequel les cales (22, 23) sont agencées dans un agencement en miroir par rapport à la section transversale à mi-chemin de la longueur du raccord (18).

5. Ensemble selon une ou plus d'une des revendications précédentes, dans lequel la hauteur du premier bloc d'expansion (20) diminue vers une ou plus d'une extrémité longitudinale de celui-ci.

6. Ensemble selon une ou plus d'une des revendications précédentes, dans lequel le second bloc d'expansion (21) est conçu pour venir en butée contre les faces définies par les passages (14) dans les parois (13) sensiblement parallèles du second élément (11) uniquement au niveau ou à proximité des extrémités longitudinales dudit second bloc d'expansion (21) lorsque le raccord (18) est dans un état déchargé, avant que le raccord (18) ne soit expansé jusqu'à l'état expansé de celui-ci.

7. Ensemble selon une ou plus d'une des revendications précédentes, dans lequel le second bloc d'expansion (21) est conçu pour venir en butée contre les faces définies par les passages (14) dans les parois (13) sensiblement parallèles du second élément (11) sur au moins la moitié de la longueur desdites faces lorsque le raccord (18) est expansé radialement jusqu'à l'état expansé pour définir le raccordement précontraint.

8. Ensemble selon une ou plus d'une des revendications précédentes, dans lequel une extrémité externe du second bloc d'expansion (21) et les faces définies par les passages (14) dans les parois (13) sensiblement parallèles du second élément (11) enferment un angle γ ≤ 2° lors du contact initial dans l'état déchargé du raccord (18).

9. Ensemble selon la revendication 8, dans lequel l'angle y est défini par une forme ou une courbure correspondante d'au moins une extrémité externe du second bloc d'expansion (21).

10. Ensemble selon une ou plus d'une des revendications précédentes, dans lequel le matériau du second bloc d'expansion (21) présente une limite d'élasticité plus élevée que le matériau du premier bloc d'expansion (20).

11. Ensemble selon une ou plus d'une des revendications précédentes, dans lequel le premier bloc d'expansion (20) comprend une surface de butée qui est conçue pour venir en butée contre le premier élément (10) lorsque le raccord (18) est expansé radialement jusqu'à l'état expansé pour définir le raccordement précontraint ;
dans lequel la surface de butée est formée de telle sorte que, dans l'état compacté, une distance entre la surface de butée et le premier élément (10) dans la direction radiale est plus petite entre une partie centrale de la surface de butée, qui est de préférence agencée à proximité du centre longitudinal du premier bloc d'expansion (20), et le premier élément (10) qu'entre une partie externe de la surface de butée, qui est de préférence agencée plus loin du centre longitudinal du premier bloc d'expansion (20), et le premier élément (10).

12. Procédé d'assemblage d'un premier et d'un second élément (10, 11) qui comprennent chacun au moins un passage (14, 16), dans lequel le second élément (11) a une section transversale en forme de fourche avec un corps principal (12) agencé entre deux parois (13) sensiblement parallèles qui comprennent chacune au moins un passage (14), ledit procédé comprenant les étapes consistant à :
- agencer le premier élément (10) entre les deux parois (13) du second élément (11) ;
- positionner les passages (14, 16) du premier et du second élément (10, 11) pour définir un canal (17) ;
- fournir un raccord (18) qui comprend :
- un premier bloc d'expansion (20) qui est conçu pour pousser le premier élément (10) contre une face (15) du corps principal (12) du second élément (11) ;
- un second bloc d'expansion (21) qui est conçu pour entrer en contact avec des faces définies par les passages (14) dans les parois (13) sensiblement parallèles du second élément ; et
- une ou plus d'une cale (22, 23) qui est agencée entre le premier bloc d'expansion (20) et le second bloc d'expansion (21), et qui est conçue pour être déplacée longitudinalement par rapport au canal (17) par un actionneur afin d'expanser de ce fait radialement le raccord (18) ;
- insérer le raccord (18) dans le canal (17) jusqu'à une position d'extrémité ;
- expanser consécutivement ledit raccord (18) radialement par rapport audit canal (17), pour raccorder de ce fait le premier et le second élément (10, 11) l'un par rapport à l'autre ; et
- le raccord (18) expansé poussant le premier élément (10) dans une direction radiale par rapport audit canal (17) contre la face (15) du corps principal (12) du second élément (11) pour définir un contact de serrage et de ce fait un raccordement précontraint dans la direction radiale par rapport audit canal (17) entre la face (15) du corps principal (12) du second élément (11) et des faces définies par les passages (14) dans les parois (13) sensiblement parallèles du second élément (11) **caractérisé en ce que**
l'étape consistant à fournir le raccord (18) consiste à fournir un raccord (18) dont, au niveau d'une section transversale à mi-chemin de la longueur du raccord (18), l'aire en section transversale et la hauteur du premier bloc d'expansion (20) dans la direction radiale par rapport audit canal (17) sont inférieures à l'aire en section transversale et à la hauteur du second bloc d'expansion (21) dans ladite direction radiale par rapport audit canal (17).

13. Procédé selon la revendication 12, dans lequel l'étape d'insertion du raccord (18) dans le canal (17) jusqu'à une position d'extrémité comprend une position d'extrémité dans laquelle le second bloc d'expansion (21) vient en butée contre les faces définies par les passages (14) dans les parois (13) sensiblement parallèles du second élément (11) uniquement au niveau ou à proximité des extrémités longitudinales dudit second bloc d'expansion (21) lorsque le raccord (18) est dans un état déchargé.

14. Procédé selon la revendication 13, dans lequel l'étape du raccord (18) expansé poussant le premier élément (10) dans la direction radiale par rapport audit canal (17) comprend la déformation du second bloc d'expansion (21) du raccord (18) jusqu'à ce que le second bloc d'expansion (21) vienne en butée contre les faces définies par les passages (14) dans les parois (13) sensiblement parallèles du second élément (11) sur au moins la moitié de la longueur desdites faces lorsque le raccord (18) est expansé radialement jusqu'à l'état expansé pour définir le raccordement précontraint.

15. Procédé selon l'une quelconque des revendications 12 à 14, comprenant en outre au moins l'un de :
- la fourniture d'un raccord (18) de ou pour un ensemble selon l'une quelconque des revendications 1 à 11 ; et
- l'assemblage d'un ensemble selon l'une quelconque des revendications 1 à 11.
